(19) Europäisches Patentamt
European Patent Office
Office européen des brevets

(11) **EP 3 099 469 B1**

(12) **EUROPÄISCHE PATENTSCHRIFT**

(45) Veröffentlichungstag und Bekanntmachung des Hinweises auf die Patenterteilung:
**09.10.2019 Patentblatt 2019/41**

(21) Anmeldenummer: **15701969.6**

(22) Anmeldetag: **29.01.2015**

(51) Int Cl.:
**B29C 64/386** (2017.01)  **B22F 3/105** (2006.01)
**B29C 64/153** (2017.01)

(86) Internationale Anmeldenummer:
**PCT/EP2015/051768**

(87) Internationale Veröffentlichungsnummer:
**WO 2015/114035 (06.08.2015 Gazette 2015/31)**

(54) **VERFAHREN UND VORRICHTUNG ZUR VERBESSERTEN STEUERUNG DES ENERGIEEINTRAGS IN EINEM GENERATIVEN SCHICHTBAUVERFAHREN**

METHOD AND DEVICE FOR THE IMPROVED CONTROL OF THE ENERGY INPUT IN A GENERATIVE LAYER CONSTRUCTION METHOD

PROCÉDÉ ET DISPOSITIF DE COMMANDE AMÉLIORÉE DE L'APPORT D'ÉNERGIE DANS UN PROCÉDÉ DE CONSTRUCTION ADDITIVE PAR GÉNÉRATION DE COUCHES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.01.2014 DE 102014201818**

(43) Veröffentlichungstag der Anmeldung:
**07.12.2016 Patentblatt 2016/49**

(73) Patentinhaber: **EOS GmbH Electro Optical Systems**
**82152 Krailling (DE)**

(72) Erfinder:
• **MÜLLER, Frank**
**81377 München (DE)**
• **PATERNOSTER, Stefan**
**82346 Andechs (DE)**
• **FRUTH, Albert**
**82110 Germering (DE)**

(74) Vertreter: **Prüfer & Partner mbB**
**Patentanwälte · Rechtsanwälte**
**Sohnckestraße 12**
**81479 München (DE)**

(56) Entgegenhaltungen:
**EP-A1- 1 568 472    WO-A1-2013/127655**

EP 3 099 469 B1

**Beschreibung**

Die vorliegende Erfindung bezieht sich auf ein Verfahren zum schichtweisen Aufbau von dreidimensionalen Objekten mittels generativer Fertigung und eine dazugehörige Vorrichtung. Insbesondere bezieht sich die vorliegende Erfindung auf ein derartiges Verfahren und eine derartige Vorrichtung, durch welche die Genauigkeit der hergestellten Objekte verbessert werden.

EP 1 568 472 A1 offenbart ein Verfahren und eine Vorrichtung zum Herstellen von Produkten durch Sintern und/oder Schmelzen. Um die Fertigungszeiten zu verkürzen, bestrahlt ein hochenergetischer Strahl 7 vorbestimmte Positionen P1 bis P6 einer Werkstoffschicht 5 jeweils mehrfach, nämlich m-fach, wobei m eine ganze Zahl größer 1 ist. Dabei wird jede dieser Positionen P1 bis P6 beim ersten Bestrahlen zunächst auf eine Temperatur unterhalb der Schmelztemperatur Tschmelz des Werkstoffs 5 erhitzt und beim m-ten Bestrahlen auf eine m-te Temperatur oberhalb dieser Schmelztemperatur erhitzt und dabei derart vollständig über die gesamte Schichtdicke hinweg aufgeschmolzen, dass sich der Werkstoff an dieser Position mit der darunter liegenden Schicht verbindet.

WO 2013/127655 A1 beschreibt ein Verfahren und eine Vorrichtung zum Herstellen dreidimensionaler Objekte mit verbesserten Eigenschaften. Hierbei wird ein bereits verfestigter Bereich einer Schicht unter Zuhilfenahme eines Elektronenstrahls kontrolliert abgekühlt. Dadurch werden die mechanischen Eigenschaften des herzustellenden Objekts verbessert.

WO 95/11100 A1 beschreibt ein Lasersinterverfahren als Spezialfall eines schichtweisen generativen Herstellungsverfahrens. Wenn als Ausgangsmaterial für die Herstellung ein Pulver verwendet wird, das durch Einbringen von Wärmeenergie versintert bzw. aufgeschmolzen wird, so läuft der Bauvorgang normalerweise so ab, dass ein CAD-Modell des herzustellenden Objekts angefertigt wird, welches in Schichten zerlegt wird, und nachfolgend das Baumaterial schichtweise entsprechend Querschnitten des CAD-Modells verfestigt wird.

Für jede Pulverschicht läuft der Bauvorgang folgendermaßen ab:
Nach dem Auftragen einer pulverförmigen Baumaterialschicht auf eine bereits verfestigte Schicht wird zunächst die neu aufgetragene Pulverschicht mittels einer Strahlungsheizung auf eine Arbeitstemperatur unterhalb der Temperatur, bei der verfestigt wird, vorgeheizt. Daraufhin richtet man Strahlung (beispielsweise einen Laserstrahl) auf die vorgeheizte Schicht zum selektiven Verfestigen des Baumaterials. Nachdem alle Schichten des Objekts gefertigt sind, lässt man dieses abkühlen und entfernt das Objekt aus dem unverfestigten Pulver, das das Objekt umgibt.

Wie aus dem soeben skizzierten Herstellungsvorgang hervorgeht, wird die Pulverschicht zunächst vorgeheizt, bevor mittels eines Laserstrahls Teile einer Pulverschicht, die einem Querschnitt des herzustellenden Objektes entsprechen, verfestigt werden durch Versintern oder Aufschmelzen. Durch das Vorheizen der Pulverschicht muss der Laserstrahl dem Pulver nur noch eine geringe Restenergie zuführen, damit der Verfestigungsvorgang stattfindet. Dies erlaubt eine schnellere selektive Verfestigung einer Schicht (selektive Belichtung eines Objektquerschnitts, der dieser Schicht entspricht) und darüber hinaus eine bessere Kontrolle der in das Pulver eingebrachten Energie.

WO 95/11100 A1 beschäftigt sich mit der Herstellung von Metallteilen aus einem Metallpulver und schildert das Problem, dass bei konstanter Laserleistung Bauteile mit ungleichmäßigen Materialeigenschaften entstehen. Dies liegt daran, dass es Bereiche des Pulverbettes gibt, die vollständig aufschmelzen, und Bereiche, bei denen kein vollständiges Aufschmelzen stattfindet. Als Ursache dieses Problems identifiziert WO 95/11100 A1 Temperaturungleichmäßigkeiten innerhalb einer Pulverschicht, auf die der Laserstrahl zur Verfestigung auftrifft.

WO 95/11100 A1 erwähnt, dass es eine Rolle spielt, ob unterhalb des Auftreffpunkts des Laserstrahls auf die aktuelle oberste Schicht, genauer gesagt in der unter dieser obersten Schicht liegenden Schicht, bereits ein Verfestigungsvorgang stattgefunden hat oder nicht. Falls unterhalb des Auftreffpunktes des Lasers, also in der darunterliegenden Schicht, noch unverfestigtes Pulvermaterial vorliegt, so wird dieses unverfestigte Material die Wärme nicht so gut ableiten und es steht mehr Energie für den Aufschmelzvorgang am aktuellen Auftreffpunkt des Lasers in der aktuellen Schicht zur Verfügung. Weiterhin wird erläutert, dass es auch eine Rolle spielt, wie viele bereits verfestigte Bereiche in der aktuellen Schicht an den aktuellen Auftreffpunkt grenzen. Für den Fall, dass viele verfestigte Bereiche an den aktuellen Auftreffpunkt grenzen, wird die Wärmeenergie durch die verfestigten Bereiche besser abgeleitet als durch unverfestigtes Pulver. Dies liegt daran, dass die verfestigten Bereiche in WO 95/11100 A1 aus gut wärmeleitendem Metall bestehen. Laut WO 95/11100 A1 muss daher für ein gutes Verfestigungsergebnis (möglichst vollständiges Aufschmelzen des Pulvers) mehr Laserenergie zugeführt werden.

Zur Lösung des eben geschilderten Problems schlägt WO 95/11100 A1 vor, die Laserenergie für jeden Auftreffpunkt des Lasers anzupassen an die Temperatur der Pulverschicht, die nahe diesem Auftreffpunkt durch einen Temperatursensor ermittelt wird.

Auch WO 2013/079581 A1, die sich mit der Herstellung von Formkörpern aus Metall- oder Keramikpulver beschäftigt, erkennt die Notwendigkeit, Temperaturinhomogenitäten innerhalb einer zu verfestigenden Schicht beim Energieeintrag mittels eines Lasers zu berücksichtigen. Allerdings möchte WO 2013/079581 A1 den relativ großen messtechnischen Aufwand sowie den Aufwand für die Echtzeit-Datenverarbeitung bei einer Temperaturerfassung nahe dem jeweiligen Auftreffpunkt des Laserstrahls vermeiden. Stattdessen wird in WO 2013/079581 A1 vorgeschlagen, die an einem Ort einzutragende Wärmeenergie bereits vor der Durchführung des gesamten Bauvorgangs rechnergestützt zu ermitteln:

Da die CAD-Daten des herzustellenden Objekts sowieso vorliegen, kann man bei Kenntnis der thermischen Parameter des verwendeten Baumaterials das Wärmeableitvermögen für jeden Strahlauftreffpunkt in jeder Schicht im Vorhinein berechnen und dementsprechend den Energieeintrag pro Zeiteinheit am jeweiligen Bestrahlungsort variieren. Das unterschiedliche Wärmeableitvermögen der Umgebung eines Strahlauftreffpunktes wird in WO 2013/079581 A1 dabei dadurch berücksichtigt, dass eine lokale Umgebung einer definierten Größe um jeden Strahlauftreffpunkt herum definiert wird und das Wärmeableitvermögen für jedes Voxel in dieser lokalen Umgebung berechnet wird. Wie bereits aus der Beschreibung des Verfahrens ersichtlich ist, ist für eine entsprechende Festlegung der Laserparameter für jeden Bestrahlungsort der Rechenaufwand nicht gering.

Daher ist es eine Aufgabe der vorliegenden Erfindung, ein Verfahren zum schichtweisen generativen Herstellen von dreidimensionalen Objekten sowie eine dazugehörige Vorrichtung bereitzustellen, die eine hohe Fertigungsgenauigkeit mit beschränktem Aufwand erzielen.

Die Aufgabe wird gelöst durch ein Verfahren nach Anspruch 1 und eine Vorrichtung nach Anspruch 9. Weiterbildungen der Erfindung sind in den Unteransprüchen angegeben.

Der Erfindung liegt die Idee zugrunde, dass es sich bei der schichtweisen Herstellung um einen dynamischen Vorgang handelt. Während der Stand der Technik eine erhöhte Detailgenauigkeit der herzustellenden Objekte dadurch erzielt, dass das durch die Geometrie des herzustellenden Objekts im Pulverbett resultierende Wärmeableitvermögen berücksichtigt wird, berücksichtigt die vorliegende Erfindung den zeitlichen Verlauf der Abkühlung eines verfestigten Bereichs.

Die Erfinder der vorliegenden Anmeldung haben erkannt, dass die Eigenschaften eines hergestellten Objektes, beispielsweise die Bruchdehnung, die Abmessung oder die Oberflächenqualität, von der Zeitdauer (Gesamtbelichtungszeit) abhängen, die für die Belichtung von zu verfestigenden Bereichen in einer Pulverschicht benötigt wird. Während beim Bau lediglich eines einzelnen Objekts die Gesamtbelichtungszeit identisch zu der Zeit ist, die für die Verfestigung des Objektquerschnitts in der Pulverschicht benötigt wird, ist bei der parallelen Fertigung mehrerer Objekte die Gesamtbelichtungszeit gleich der Summe der Belichtungsdauern für die Querschnitte der einzelnen Objekte. Erstaunlicherweise hängen also die Eigenschaften eines bestimmten Objekts davon ab, wie viele weitere Objekte parallel zu diesem Objekt hergestellt werden. Die Ursache hierfür ist die Folgende:

Bei einer langen Gesamtbelichtungsdauer für die innerhalb einer Schicht zu belichtenden (zu verfestigenden) Bereiche haben diese Bereiche länger Zeit, durch Wärmestrahlung, Wärmeleitung oder Konvektion Wärme abzugeben. Daher kühlt die Schicht stärker ab und insgesamt steht nicht so viel Energie zum Aufschmelzen oder Sintern der nachfolgenden Schicht zur Verfügung. Als Folge sind die mechanischen Eigenschaften, beispielsweise die Bruchdehnung, aufgrund einer schlechteren Haftung der nachfolgenden Schicht, schlechter. Umgekehrt kühlt bei einer kurzen Gesamtbelichtungszeit einer Schicht diese nicht so stark ab und das Pulver in der nachfolgenden Schicht kann vollständiger aufschmelzen, woraus bessere mechanische Eigenschaften resultieren.

Nicht nur die mechanischen Eigenschaften werden durch die Gesamtbelichtungszeit der Schichten beeinflusst, auch z.B. die Oberflächenqualität und weitere Größen werden dadurch beeinflusst. Beispielsweise werden auch die Abmessungen eines Objektquerschnitts durch die Schichtbelichtungszeit beeinflusst, weil bei einer längeren Belichtungszeit (und einer stärkeren Abkühlung) einer Schicht in der darüberliegenden Schicht weniger unverfestigtes Pulver am Rand des Objektquerschnitts anhaftet als bei einer kürzeren Gesamtbelichtungszeit für die Schicht.

Weiterhin beeinflusst auch die Gesamtbelichtungszeit der aktuellen Schicht die Eigenschaften des Objekts.

Das erfindungsgemäße Verfahren erhöht oder erniedrigt (also reduziert) den Wärmeeintrag pro Einheitsfläche der Strahlung zum Verfestigen in Abhängigkeit von der Gesamtbelichtungszeit des zu verfestigenden Bereichs in der unter der aktuell zu belichtenden Schicht liegenden Schicht oder in Abhängigkeit von der Gesamtbelichtungszeit des zu verfestigenden Bereichs in der aktuell zu belichtenden Schicht. Damit kann man dynamische Vorgänge während der Herstellung berücksichtigen, was im Stand der Technik nicht der Fall ist. Als Folge können Bauteile mit verbesserten mechanischen Eigenschaften und verbesserter Detailtreue erhalten werden, wobei nicht auf komplizierte Berechnungen oder Messverfahren zurückgegriffen werden muss. Im Folgenden wird zur Verdeutlichung, dass es erfindungsgemäß auf die Belichtungsdauer des gesamten in einer Schicht zu verfestigenden Bereichs ankommt in der Regel von dem "zu verfestigenden Bereich" gesprochen und nicht vom "Objektquerschnitt", damit auch die parallele Herstellung von mehreren Objekten in dem Behälter, in dem der Bauvorgang stattfindet, umfasst ist.

Nachfolgend wird die Erfindung unter Zuhilfenahme der Zeichnungen beschrieben. Von den Figuren zeigen:

Fig. 1     ein Beispiel einer Vorrichtung zur schichtweisen Herstellung von dreidimensionalen Objekten aus einem pulverförmigen Baumaterial gemäß der Erfindung,

Fig. 2     ein Testbauteil, welches im Rahmen eines beispielhaften Vortests hergestellt wurde, um die Abänderung des Energieeintrags in Abhängigkeit von der Schichtbelichtungszeit zu ermitteln,

Fig. 3    eine Kurve, welche die Abhängigkeit einer an dem Testbauteil ermittelten mittleren Dicke in Abhängigkeit von der Belichtungszeit für eine Schicht darstellt,

Fig. 4    einen anhand der Vermessung des Testbauteils ermittelten Vorfaktor für den Energieeintrag in Abhängigkeit von der Belichtungszeit bei der Verfestigung des Testbauteils,

Fig. 5    eine Kurve, welche die an einem Testbauteil ermittelte mittlere Dicke für den Fall zeigt, dass der Energieeintrag an die Belichtungszeit angepasst wurde und

Fig. 6    eine Draufsicht auf das Baufeld zur Veranschaulichung eines optionalen Vorgehens zur Vermeidung von lokalen Überhitzungen.

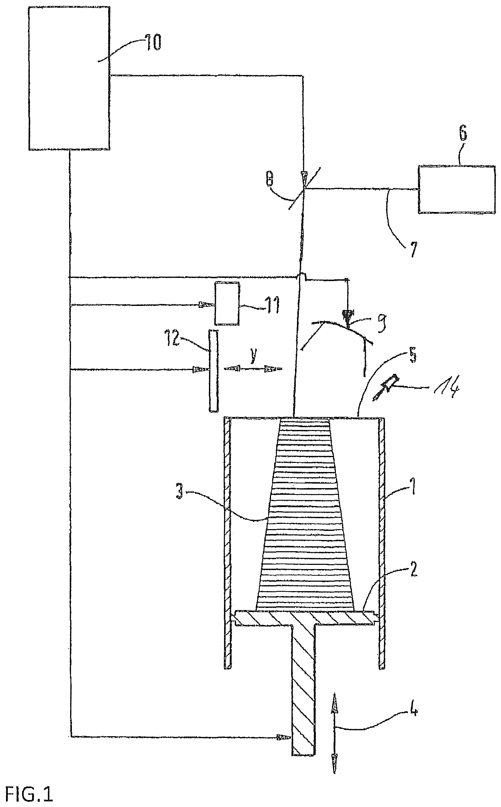

Mit Bezug auf Fig. 1 wird zunächst der Aufbau einer erfindungsgemäßen Vorrichtung zum Herstellen von dreidimensionalen Objekten mittels eines generativen Schichtbauverfahrens am Beispiel einer Lasersintervorrichtung beschrieben.

Wie in Fig. 1 gezeigt, wird das herzustellende Objekt 3 auf einer Bauunterlage 2 schichtweise hergestellt. Die Bauunterlage 2 bildet den Boden und ein Rahmen 1 die Seitenwände eines nach oben offenen Behälters, in dem der Bauvorgang stattfindet. Die Bauunterlage 2 ist mit einer Hubmechanik 4 verbunden, die die Bauunterlage in vertikaler Richtung verfahren kann. Der Rahmen 1 umschließt mit seinem oberen Ende ein Baufeld 5, in dem die Verfestigung stattfindet. Oberhalb des Baufelds 5 ist ein Beschichter 11 zum Aufbringen einer Schicht eines pulverförmigen Baumaterials im Baufeld angeordnet. Als pulverförmiges Baumaterial können dabei alle mittels Wärmeeintrag verfestigbaren Pulver verwendet werden, beispielsweise Polymerpulver, Metallpulver, Keramikpulver oder aber auch Kompositpulver, die aus verschiedenartigen Materialien zusammengesetzt sind. Des Weiteren können den Pulvern auch Füllstoffe und/oder Additive zugesetzt sein.

Die Figur 1 zeigt weiterhin schematisch eine Auftragsvorrichtung 12, welche in horizontaler Richtung verfahrbar ist und der Glättung einer aufgetragenen Pulverschicht dient. Weiterhin ist eine Bestrahlungsvorrichtung in Gestalt eines Lasers 6 vorgesehen, der einen Laserstrahl 7 erzeugt, welcher durch eine Ablenkeinrichtung 8 auf beliebige Punkte in dem Baufeld 5 gerichtet werden kann. Durch Einwirkung des Laserstrahls 7 auf das pulverförmige Baumaterial im Baufeld kann das pulverförmige Baumaterial selektiv erhitzt werden, so dass es sich als Folge an jenen Stellen verfestigt, die einem Querschnitt des herzustellenden Objekts 3 entsprechen.

Weiterhin enthält die erfindungsgemäße Vorrichtung eine Heizvorrichtung 9 oberhalb des Baufelds 5, welche eine neu aufgetragene Pulverschicht auf eine Arbeitstemperatur unterhalb einer Temperatur, bei der die Verfestigung des pulverförmigen Baumaterials stattfindet, vorheizt. Vorzugsweise handelt es sich bei der Heizvorrichtung (9) um eine Strahlungsheizung (z.B. einen oder mehrere Heizstrahler), die durch Emittieren von elektromagnetischer Strahlung großflächig Wärmeenergie in die neu aufgetragene Pulverschicht einbringen kann. Das Bezugszeichen 10 bezeichnet eine Steuervorrichtung, welche mit dem Laser 6, der Ablenkvorrichtung 8, dem Beschichter 11, der Auftragsvorrichtung 12 und der Hubmechanik 4 verbunden ist, und den Bauvorgang steuert. In Fig. 1 nicht dargestellt ist ein Gehäuse, das den Rahmen 1, die Hubmechanik 4, den Laser 6, die Ablenkeinrichtung 8, den Beschichter 11 und die Auftragsvorrichtung 12 umgibt. Weiterhin ist in Fig. 1 zwar nur ein Objekt 3 gezeigt, es können aber dennoch auch mehrere Objekte 3 nebeneinander parallel hergestellt werden.

Nachfolgend wird der Ablauf eines erfindungsgemäßen Verfahrens zum schichtweisen generativen Aufbau eines dreidimensionalen Objekts beschrieben:
Zunächst wird die Bauunterlage 2 mittels der Hubmechanik 4 in eine Stellung verfahren, in der die Oberseite der Bauunterlage 2 oder einer auf ihr angeordneten Bauplattform knapp unterhalb der Oberkante des Rahmens 1 liegt. Nachfolgend wird das von dem Beschichter 11 aufgebrachte pulverförmige Baumaterial mittels der Auftragsvorrichtung 12 homogen auf der Bauunterlage 2 oder der Bauplattform verteilt. Der eingangs eingestellte vertikale Abstand zur Oberkante des Rahmens 1 definiert dabei die Dicke der aufgebrachten Schicht. Nachfolgend wird eine Wartezeit eingefügt, innerhalb derer die aufgebrachte Pulverschicht mittels der Heizvorrichtung 9 auf eine Arbeitstemperatur unterhalb einer Temperatur, bei der das Baumaterial durch die Einwirkung des Laserstrahls verfestigt wird, vorerwärmt wird. Auch die Heizvorrichtung 9 ist vorzugsweise mit der Steuereinrichtung 10 verbunden. Vorzugsweise wird die Temperatur der vorgeheizten Baumaterialschicht mittels einer Temperaturmesseinrichtung 14 kontrolliert. Bei der Temperaturmesseinrichtung 14 kann es sich um ein Pyrometer handeln, das in einem Bereich des Baufelds 5 die Oberflächentemperatur der aufgebrachten Schicht misst. Sobald die gewünschte Pulverschichttemperatur erreicht ist, wird die Pulverschicht in ihrer dem Querschnitt des Objekts entsprechenden Region durch Eintrag von Wärmeenergie mittels des Laserstrahls verfestigt. Hieraufhin wird die Bauunterlage 2 erneut um den Betrag einer Schichtdicke des Baumaterials abgesenkt, erneut Baumaterial aufgetragen, vorerwärmt, selektiv verfestigt, usw. Die letztgenannten Schritte werden solange wiederholt bis der Herstellvorgang des Objekts abgeschlossen ist. Je nach Pulvertyp kann es vorteilhaft sein, einige Schichten unverfestigtes Baumaterial vor der ersten Schicht, die teilweise verfestigt wird, und/oder nach der letzten Schicht, die teilweise verfestigt wird, aufzutragen.

Die Menge der mittels der Laserstrahlung in das pulverförmige Baumaterial eingebrachten Wärmeenergie, welche letztendlich zu einer Verfestigung des Pulvermaterials führt, legt die erzielten mechanischen Eigenschaften und die Detailgenauigkeit des erhaltenen Objekts fest. Wie es für den eingangs genannten Stand der Technik bereits beschrieben wurde, kann die eingebrachte Wärmemenge pro Einheitsfläche über die Pulverschicht hinweg variiert werden, um Temperaturinhomogenitäten innerhalb der Pulverschicht zu berücksichtigen. Darüber hinaus wird aber gemäß der vorliegenden Erfindung der für jeden Punkt eines zu verfestigenden Bereichs in einer Pulverschicht festgelegte Betrag für die einzubringende Wärmeenergie pro Einheitsfläche noch zusätzlich im Vergleich zu der in andere Schichten eingebrachten Wärmeenergie pro Einheitsfläche abgeändert. Bevorzugt wird die jeweilige an den Punkten eines zu verfestigenden Bereichs in die Schicht einzubringende Wärmemenge mit einem Vorfaktor multipliziert, der von der Gesamtbelichtungsdauer für den aktuell zu verfestigenden Bereich oder von der Gesamtbelichtungsdauer für den zu verfestigenden Bereich in der darunterliegenden Schicht abhängt. Dieser Vorfaktor ist vorzugsweise für alle Punkte des aktuell zu verfestigenden Bereichs gleich, obwohl dies nicht zwingend so sein muss:

Es kann beispielsweise vorkommen, dass mehrere Teile gleichzeitig hergestellt werden, einige dieser Objekte jedoch nur Dummy-Objekte (Testobjekte) sind, bei denen es nicht auf die mechanischen Eigenschaften ankommt. In solch einem Fall muss nicht im gesamten innerhalb einer Schicht zu verfestigenden Bereich die eingebrachte Wärmeenergie pro Einheitsfläche erfindungsgemäß verändert werden. Das erfindungsgemäße Vorgehen kann sich auf einen Teilbereich des in einer Schicht zu verfestigenden Bereichs beschränken, der nicht die Dummy-Objekte umfasst. Ferner kann es Fälle geben, in denen beispielsweise im Konturbereich eines Objekts ein erfindungsgemäßes Vorgehen nicht notwendig ist. Auch dann muss nicht an allen zu verfestigenden Stellen der Schicht die Gesamtbelichtungszeit der vorhergehenden Schicht oder aktuellen Schicht berücksichtigt werden und der Konturbereich bleibt davon ausgenommen.

Unter dem Gesichtspunkt guter mechanischer Eigenschaften kann es ferner ausreichend sein, das erfindungsgemäße Verfahren nur an jenen Stellen eines Objekts anzuwenden, an denen gute mechanische Eigenschaften erforderlich sind. Das erfindungsgemäße Verfahren wird also insbesondere in einem Teilbereich eines in einer Schicht zu verfestigenden Bereichs angewendet werden, der oberhalb eines bereits verfestigten Bereichs in der darunterliegenden Schicht liegt, mit anderen Worten einen bereits verfestigten Bereich in der darunterliegenden Schicht überdeckt. Die Zeitdauer für die Verfestigung in einer Schicht ist für eine gegebene Lasersintervorrichtung bekannt, da die Verfahrgeschwindigkeit des Lasers bekannt ist. Darüber hinaus ist aus den CAD-Daten des/der herzustellenden Objekte(s) bekannt, welche Stellen innerhalb einer Schicht verfestigt werden sollen. Daher kann für einen innerhalb der aktuellen Schicht zu verfestigenden Bereich die notwendige Zeitdauer im Vorhinein berechnet werden. Die Zeitdauer des Verfestigungsvorgangs für einen Bereich in der unter der aktuell zu belichtenden Schicht liegenden Schicht lässt sich durch eine einfache Zeitmessung ermitteln.

Ein erfindungsgemäßes Herstellen eines Objekts mittels generativer Fertigung kann also so aussehen, dass man die Zeitdauer für die Verfestigung des/der Objektquerschnitte(s) in einer Schicht (Gesamtbelichtungszeitdauer) misst und dann bei der nachfolgenden Schicht einen Vorfaktor für den Wärmeenergieeintrag pro Einheitsfläche in Abhängigkeit von der gemessenen Zeitdauer wählt. Alternativ oder zusätzlich kann für die Wahl des Vorfaktors die Gesamtbelichtungszeitdauer für den/die Objektquerschnitt(e) in der aktuellen Schicht, die auf der Grundlage der bekannten Laserablenkgeschwindigkeit und der bekannten CAD-Daten berechnet wurde, berücksichtigt werden.

Das erfindungsgemäße Vorgehen lässt sich anhand der folgenden Gleichung prägnant beschreiben, in welcher $E_{korrigiert}$ die tatsächlich an einem Ort eingebrachte Wärmeenergiemenge pro Einheitsfläche ist, Estandard die ohne Berücksichtigung einer Schichtbelichtungszeit einzubringende Wärmeenergiemenge pro Einheitsfläche ist und K ein Vorfaktor ist, welcher von der Gesamtbelichtungszeit eines zu verfestigenden Bereichs in der vorhergehenden und/oder der aktuellen Schicht abhängt:

$$E_{korrigiert} = K \cdot E_{standard} \qquad (1)$$

Die Ermittlung des Vorfaktors kann beispielsweise empirisch durch Vortests in der gleichen generativen Fertigungsvorrichtung ermittelt werden, in der die dreidimensionalen Objekte hergestellt werden sollen. Dabei werden vor der eigentlichen Objektherstellung Testobjekte aus dem gleichen Baumaterial hergestellt und vermessen. Bevorzugt hat der Vorfaktor K für alle in der aktuellen Schicht zu belichtenden Stellen denselben Wert, ist also über die Schicht hinweg konstant. Falls das erfindungsgemäße Verfahren lediglich in einem Teilbereich des zu belichtenden Bereichs einer Schicht zum Einsatz kommt, hat bevorzugt der Vorfaktor K zumindest an Stellen dieses Teilbereichs denselben Wert.

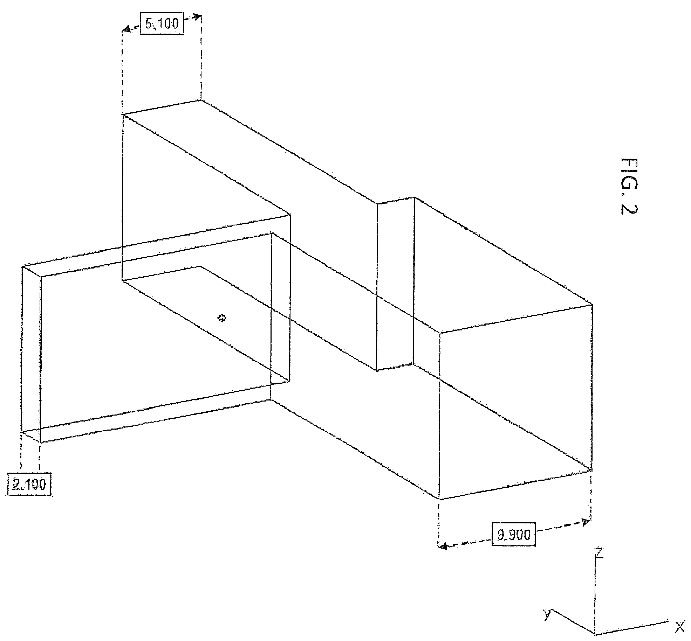

Nachfolgend wird ein beispielhaftes Verfahren zum empirischen Bestimmen eines Vorfaktors beschrieben: Zunächst wird in der generativen Schichtbauvorrichtung (beispielsweise der Vorrichtung von Fig. 1) ein in Fig. 2 gezeigtes Testobjekt nacheinander mehrmals hergestellt, wobei sich die einzelnen Herstellungsvorgänge dadurch unterscheiden, dass sich die für einen zu verfestigenden Bereich (dieser entspricht dem Querschnitt des Testobjekts) erforderlichen Belichtungszeiten (Verfestigungszeiten) unterscheiden. Da sich Lage und Gestalt eines Objektquerschnitts bei dem Testbauteil von Fig. 2 in z-Richtung nicht ändern, ist für jeden der Herstellungsvorgänge für alle Querschnitte des Testobjekts die Belichtungszeit (Verfestigungszeit) gleich.

Anschließend werden Abmessungen der Testobjekte an mehreren Stellen jedes Testobjekts (in diesem Beispiel drei Stellen) gemessen. Die Messungen sollten dabei an allen Testobjekten an den gleichen Stellen durchgeführt werden. In Fig. 2 zum Beispiel handelt es sich um die Abmessung (Dicke) dreier Objektabschnitte mit den Normabmessungen 2,1 mm, 5,1 mm und 9,9 mm. Aus diesen drei Abmessungen kann für jedes Testobjekt eine mittlere Abmessung berechnet werden. In der nachfolgenden Tabelle ist solch eine mittlere Abmessung (mittlere Dicke) in Abhängigkeit von der Belichtungsdauer für jeden Objektquerschnitt wieder gegeben:

| Schichtbelichtungszeit [s] | mittlere Dicke [mm] |
|---|---|
| 7,2 | 5,736 |
| 15,4 | 5,714 |
| 17,8 | 5,707 |
| 28,5 | 5,688 |
| 50,0 | 5,668 |

Bei der Herstellung der Testobjekte kann die Gesamtbelichtungszeit für jeden Objektquerschnitt dadurch eingestellt werden, dass entweder nach dem Abschluss des Verfestigungsvorgangs jedes Testobjektquerschnitts eine Wartezeit eingefügt wird oder aber während des Verfestigungsvorgangs jedes Testobjektquerschnitts eine oder mehrere Warteperioden, in denen keine Verfestigung stattfindet, eingefügt werden. Ein Objektquerschnitt des Testobjektes von Fig. 2 kann also innerhalb von 7,2 s (dem Minimalwert in der Tabelle) verfestigt werden und die längeren Zeitdauern in der Tabelle resultieren aus eingefügten Wartezeiten.

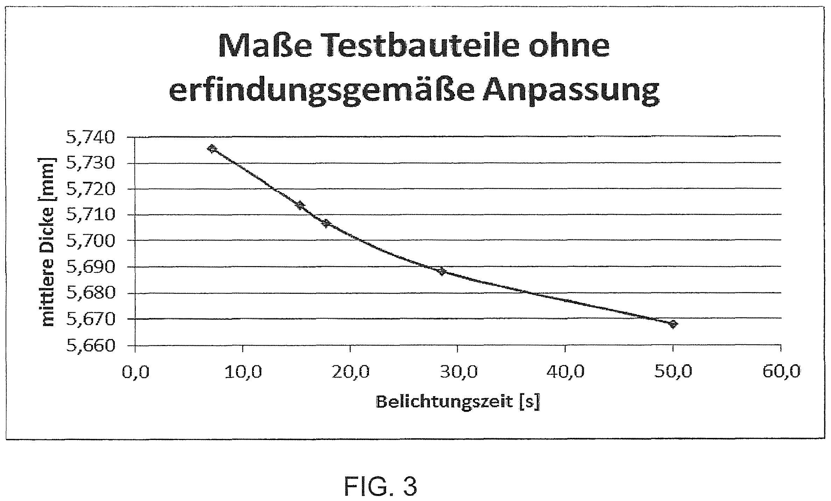

Fig. 3 zeigt die erhaltenen Maße für das Testbauteil in Abhängigkeit von der Belichtungszeit für jeden Objektquerschnitt. Erwartungsgemäß nimmt die gemessene Ausdehnung (mittlere Dicke) mit zunehmender Belichtungszeit ab, da ein verfestigter Objektquerschnitt länger Zeit hat, durch Abstrahlung oder Konvektion abzukühlen. Daraus resultierend haftet dann weniger Pulver am Rande des in der darüberliegenden Schicht verfestigten Objektquerschnitts an, so dass die am Testobjekt bestimmte mittlere Dicke verringert ist im Vergleich zu einem Testobjekt, das mit einer geringeren Belichtungszeit für jeden Querschnitt verfestigt wurde.

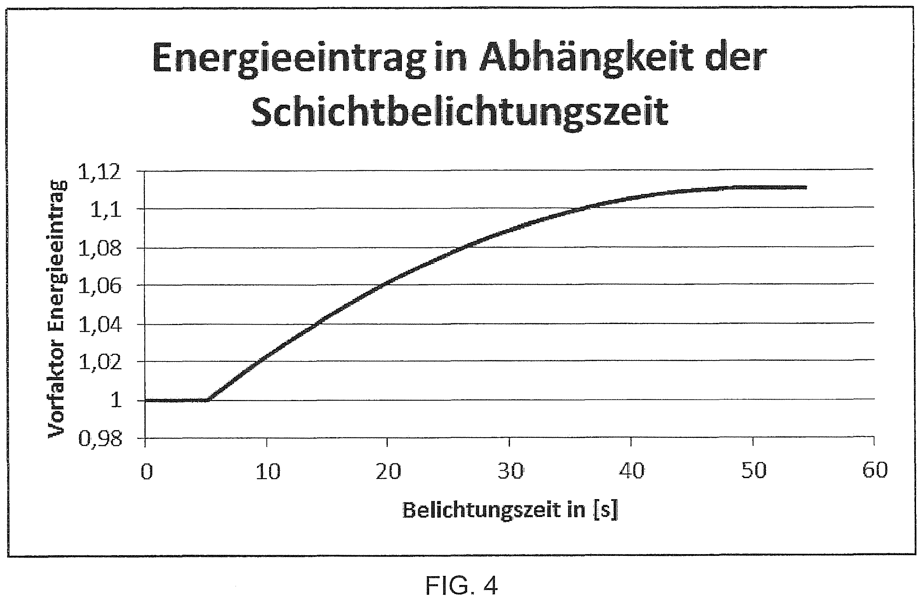

Aus der Fig. 3 kann ermittelt werden, wie für längere Belichtungszeiten die in den Objektquerschnitt einzutragende Wärmeenergiemenge pro Einheitsfläche erhöht werden muss. Auf der Grundlage von Fig. 3 kann also die notwendige prozentuale Erhöhung der einzutragenden Wärmeenergiemenge pro Einheitsfläche ermittelt werden. Das zugehörige Ergebnis ist in Fig. 4 dargestellt, wobei Fig. 4 den Vorfaktor K in der obigen Gleichung (1) zeigt. In Fig. 4 fällt dabei auf, dass K erst ab Belichtungszeiten, die größer als 5s sind, einen Wert hat, der größer als 1 ist. Dies hängt damit zusammen, dass es bei der in diesem Ausführungsbeispiel verwendeten generativen Schichtbauvorrichtung, einer EOS P395 mit Standardeinstellungen eine Mindestschichtbelichtungszeit von 5s gibt.

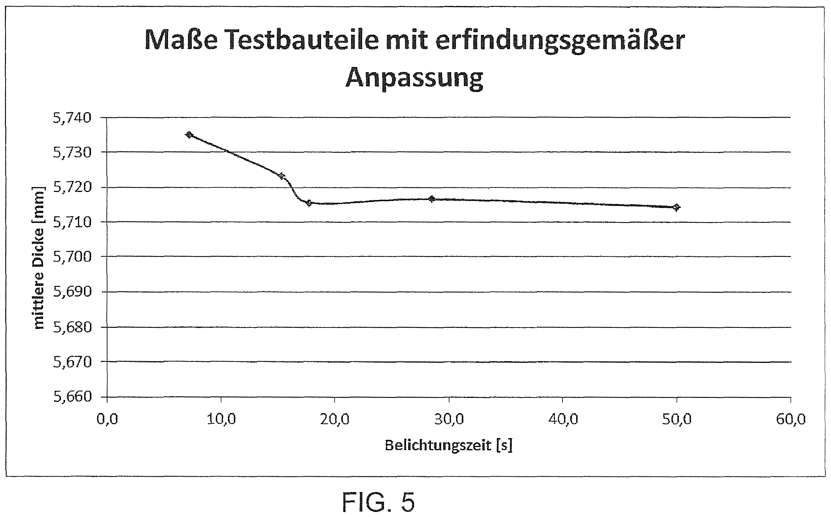

Die Werte für den Vorfaktor K lassen sich durch eine begrenzte Anzahl von Versuchen ermitteln, bei denen die Abhängigkeit des Vorfaktors K von der Schichtbelichtungszeit variiert wird. Fig. 5 zeigt Abmessungen von Testbauteilen, die mit verschiedenen Belichtungszeiten ihrer Objektquerschnitte hergestellt wurden und bei denen der Wärmeenergieeintrag pro Einheitsfläche mit den in Fig. 4 gezeigten Vorfaktoren in Abhängigkeit von der Schichtbelichtungszeit korrigiert wurde. Man erkennt, dass eine deutlich gleichmäßigere Dicke unabhängig von der Belichtungszeit erzielt werden kann.

An den Testbauteilen in diesem Ausführungsbeispiel wurde eine repräsentative Abmessung ("mittlere Dicke") ermittelt und der Vorfaktor, mit dem der Wärmeenergieeintrag pro Einheitsfläche zu multiplizieren ist, auf der Grundlage dieser repräsentativen Abmessung festgelegt. Wie bereits in der Beschreibungseinleitung erwähnt wurde, beeinflusst die dem Pulver insgesamt zugeführte Wärmemenge nicht nur die Abmessungen eines hergestellten Objekts, sondern auch weitere Eigenschaften. Man könnte daher an den wie eben beschrieben hergestellten Testbauteilen alternativ oder zusätzlich zu der Bestimmung einer charakteristischen Abmessung einen charakteristischen mechanischen Wert, beispielsweise die Bruchdehnung, einen die Oberflächengüte kennzeichnenden Parameter oder andere Eigenschaften ermitteln und als Grundlage für die Festlegung des Vorfaktors) verwenden.

Nachdem auf dem aufgezeigten empirischen Weg ein Zusammenhang zwischen dem Vorfaktor K und der Belichtungszeit für einen Objektquerschnitt eines Testbauteils ermittelt wurde, kann für die Herstellung von dreidimensionalen Objekten folgendermaßen vorgegangen werden:

Es wird die Zeitdauer gemessen, die für die Belichtung des gesamten in einer Schicht zu verfestigenden Bereichs notwendig war. Bei der Verfestigung der nachfolgenden Schicht wird der Wärmeenergieeintrag pro Einheitsfläche um den Vorfaktor K korrigiert, welcher abhängig von der Belichtungsdauer der vorangegangenen Schicht gewählt wird.

Betrug also die Belichtungszeit des Objektquerschnitts in der vorangegangenen Schicht beispielsweise 20s, so würde auf der Grundlage von Fig. 4 ein Vorfaktor mit dem Wert 1,06 gewählt werden. Alternativ oder zusätzlich kann auch die im Vorhinein ermittelte Belichtungsdauer für den gesamten in der aktuellen Schicht zu verfestigenden Bereich Eingang finden in die Ermittlung des Vorfaktors K.

Natürlich könnte man auch versuchen, aufgrund theoretischer Überlegungen zu ermitteln, wie die einzubringende Wärmeenergiemenge pro Einheitsfläche in Abhängigkeit von der Belichtungsdauer des in der aktuellen und/oder der vorangegangenen Schicht zu verfestigenden Bereichs korrigiert werden muss. Allerdings hängt das Abkühlverhalten innerhalb eines zu verfestigenden Bereichs vom pulverförmigen Baumaterial ab und wird zudem durch die Art und Anordnung der Heizvorrichtung 9 mitbestimmt. Daher ist es am Zweckmäßigsten, die Abhängigkeit anhand des beschriebenen Vortests zu ermitteln.

Welche Art von Bauteilen für den Vortest verwendet wird, hängt davon ab, welche Eigenschaften an dem eigentlich zu produzierenden Objekt am Wichtigsten sind. Auf alle Fälle ist es für eine sinnvolle Variation der Belichtungszeitdauer hilfreich, wenn sich der Querschnitt des Testobjekts nicht in z-Richtung (Aufbaurichtung) ändert.

Die in das Baumaterial zur Verfestigung eingebrachte Wärmeenergiemenge pro Einheitsfläche kann durch eine Variation der Lichtintensität des Lasers variiert werden. Alternativ oder zusätzlich kann auch die Einwirkungsdauer des Lasers auf einen zu verfestigenden Ort der Pulverschicht verändert werden, indem die Geschwindigkeit, mit der der Laser über das Baufeld 5 streicht, verändert wird. Je schneller sich der Laserstrahl über das Baufeld 5 bewegt, desto weniger Wärmeenergie pro Zeiteinheit wird in das Baumaterial eingetragen. Zur Erhöhung der eingebrachten Wärmeenergiemenge pro Einheitsfläche könnte man also die Geschwindigkeit, mit der der Laser das Baufeld überstreicht, verringern. Es sei bemerkt, dass sich durch Verändern der Laserablenkgeschwindigkeit zwar die Gesamtbelichtungszeit der aktuellen Schicht ändert, es infolge der Korrektur des Wärmeenergieeintrags pro Einheitsfläche aber nicht zu einem unbegrenzten Anwachsen der Schichtbelichtungszeiten kommt, sondern vielmehr die Gesamtbelichtungszeit zu einem Maximalwert hin konvergiert.

Weiterhin kann die pro Einheitsfläche eingebrachte Wärmeenergiemenge auch dadurch variiert werden, dass der Spurabstand mit dem der Laser einen zu belichtenden Bereich überstreicht (beim sog. "Hatching"), variiert wird. Ferner kann die vom Laser emittierte Lichtleistung bei gepulstem Betrieb ebenfalls über eine Änderung der Frequenz und/oder des Tastverhältnisses variiert werden.

Die Regelung des Herstellungsvorgangs erfolgt, wenn die in Fig. 1 gezeigte Lasersintervorrichtung verwendet wird, über die Steuereinrichtung 10, welche die Lichtintensität des Lasers und/oder dessen Ablenkgeschwindigkeit und/oder den Spurabstand steuert.

Bei einer Abwandlung des erfindungsgemäßen Verfahrens wird auf der Grundlage der Belichtungszeit für einen zu verfestigenden Bereich alternativ oder zusätzlich zu der eingebrachten Wärmeenergiemenge pro Einheitsfläche der "Beam-Offset" angepasst. Der Beam-Offset bezeichnet einen Betrag, um den der Laserstrahl an der Kontur des Objekts nach innen versetzt wird, um u.a. zu berücksichtigen, dass aufgrund von Wärmeleitung auch das Pulver unmittelbar außerhalb des zu verfestigenden Bereichs mitverfestigt wird, wodurch sich die Objektabmessungen ändern. Wenn die Belichtungsdauer für die zuletzt partiell verfestigte Schicht groß war und somit der verfestigte Bereich sich über einen längeren Zeitraum abkühlen konnte, dann wird tendenziell weniger Pulver an der Außenkontur des aktuell zu verfestigenden Bereichs ansintern. Entsprechend kann dann beim aktuellen zu verfestigenden Bereich ein geringerer beam offset gewählt werden. Es kann also auch der beam offset in Abhängigkeit von der Belichtungsdauer für die vorangegangene und/oder die aktuelle Schicht eingestellt werden.

Bei einer weiteren Abwandlung der vorliegenden Erfindung wird nicht nur die Belichtungszeit für einen zu verfestigenden Bereich in der aktuellen Schicht oder der unter dieser liegenden Schicht für die Ermittlung eines Vorfaktors berücksichtigt, um den bei der aktuellen Schicht die einzutragende Wärmeenergiemenge pro Einheitsfläche oder den beam offset zu korrigieren. Vielmehr werden zusätzlich noch die Belichtungszeiten der zu verfestigenden Bereiche in weiteren Schichten unterhalb der aktuellen Schicht berücksichtigt.

Auch wenn vorstehend stets von einer Verfestigung des Baumaterials mittels eines Laserstrahls die Rede war, so ist die vorliegende Erfindung nicht auf diese Art des Wärmeenergieeintrags eingeschränkt. Die Erfindung kann in allen generativen Fertigungsvorrichtungen zum Einsatz kommen, in denen ein pulverförmiges Baumaterial schichtweise mittels Wärmeenergieeintrag verfestigt wird. Die eingetragene Wärmeenergie kann dabei auch linienförmig oder flächig (z.B. durch Maskenbelichtung) eingebracht werden und es muss nicht zwangsläufig Laserstrahlung zum Einsatz kommen. Insbesondere ist auch an den Einsatz von Elektronenstrahlung zu denken. Ferner ist die vorliegende Erfindung sowohl in Vorrichtungen anwendbar, in denen das Baumaterial vollständig geschmolzen wird, als auch in Vorrichtungen, in denen ein Sintervorgang stattfindet, bei dem die Pulverpartikel lediglich oberflächlich aufgeschmolzen werden.

Die Erfindung lässt sich vorteilhaft insbesondere in Verfahren einsetzen, bei denen dreidimensionale Objekte aus einem Kunststoffpulver oder einem Baumaterial, das ein Kunststoffpulver aufweist, hergestellt werden bzw. in Vorrichtungen, die für die Durchführung eines Verfahrens mit einem Baumaterial, welches Kunststoffpulver aufweist oder aus diesem besteht, geeignet sind. Als Beispiele für mögliche Kunststoffpulver seien lasersinterbare Polymere wie Polyaryletherketone, Polyarylethersulfane, Polyamide, Polyester, Polyether, Polyolefine, Polystyrole, Polyphenylensulfide, Polyvinylidenfluoride, Polyphenylenoxide, Polyimide deren Copolymere und Blends, die mindestens eines der vorangehenden Polymere einschließen, wobei die Auswahl jedoch nicht auf die oben genannten Polymere und Copolymere beschränkt ist, genannt. Besonders geeignete Polyaryletherketone können aus der Gruppe Polyetheretherketon (PEEK), Polyetherketoneketon (PEKK), Polyetherketon (PEK), Polyetheretherketoneketon (PEEKK) und Polyetherketoneetherketoneketon (PEKEKK) und Polyetheretheretherketon (PEEEK) sowie deren Copolymere insbesondere mit Polyorylethersulfonen sowie deren Blends ausgewählt werden, welche mindestens eines der zuvorgenannten Polymere beinhalten. Besonders geeignete Polyamid-Polymere oder Copolymere und deren Blends können aus der Gruppe ausgewählt werden, die aus Polamid 6/6T, Polyamidelastomeren wie Polyetherblockamide wie z.B. PEBAX-basierte Materialien, Polyamid 6, Polyamid 66, Polyamid 11, Polyamid 12, Polyamid 612, Polyamid 610, Polyamid 1010, Polyamid 1212, Polyamid PA6T/66, PA4T/46 und Copolymeren besteht, die mindestens eines der vorgenannten Polymere einschließen. Geeignete Polyesterpolymere oder Copolymere können aus der aus Polyalkylenterephthalaten (z.B. PET, PBT) und deren Copolymeren ausgewählt werden. Geeignete Polyolefinpolymere oder Copolymere können aus der aus Polyethylen und Polypropylen bestehenden Gruppe ausgewählt werden. Geeignete Polystyrolpolymere oder Copolymere können aus der aus syndiotaktischen und isotaktischen Polystyrolen bestehenden Gruppe ausgewählt werden.

Des Weiteren können Polymere-Kompositpulver verwendet werden, welche Füllstoffe und/oder Additive neben dem entsprechenden Polymer, Copolymer oder Blend enthalten. Zu solchen Füllstoffen zählen beispielsweise Fasern wie z. B. Kohle- oder Glasfasernfasern und Carbon-Nanotubes, Füllstoffe mit einem geringen Aspektverhältnis wie z.B. Glaskugeln oder Alugries, mineralische Füllstoffe wie z.B. Titandioxid. Zu den Additiven zählen u.a. Prozeßhilfsmittel wie z. B. Rieselhilfsmittel der Aerosil-Serie (z.B. Aerosil 200), funktionelle Additive wie Hitzestabilisatoren, Oxidationsstabilisatoren, Farbpigmente (z.B. Graphit und Ruß) und Flammschutzmittel (z.B. Organophosphate, polybromierte Kohlenwasserstoffe).

Abgesehen von der beschriebenen unterschiedlichen Auskühlung von verfestigten Bereichen kann auch eine Anhäufung von dicht beieinander liegenden Bauteilen zu einer Temperaturinhomogenität, insbesondere zu einer lokalen Temperaturüberhöhung, führen, da in solch einem Fall viel Energie auf kleinem Raum in die Pulverschicht eingebracht wird. Ein ähnlicher Effekt ist bei einem Objekt möglich, das einen großen massiven Teilabschnitt aufweist.

Die beschriebene lokale Temperaturüberhöhung kann eine Schädigung des Baumaterials nach sich ziehen. Zur Vermeidung schlagen die Erfinder das nachfolgende optionale Vorgehen vor:

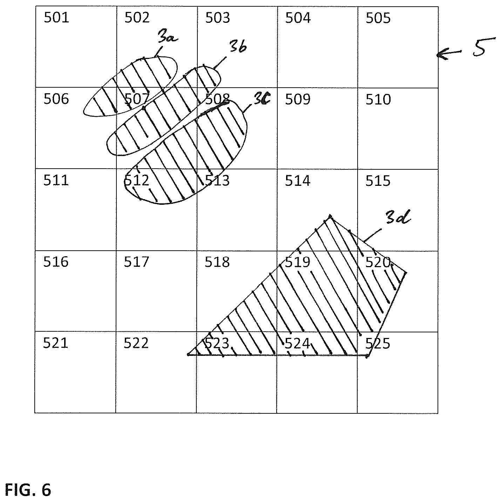

Fig. 6 zeigt in schematischer Weise das Baufeld 5 bei Betrachtung von oben. In der somit erkennbaren obersten Pulverschicht sind mit den Bezugzeichen 3a bis 3d in dieser Schicht zu verfestigende Objektquerschnitte gezeigt. Einerseits bei der Anhäufung von Objektquerschnitten 3a bis 3c, andererseits innerhalb des großflächigen Objektquerschnitts 3d könnte es zu einer lokalen Temperaturüberhöhung kommen.

Die Erfinder schlagen nun vor, das Baufeld 5 in mehrere, bevorzugt identische, Teilfelder aufzuteilen. In Figur 6 sind lediglich beispielhaft fünfundzwanzig Teilfelder 501 bis 525 gezeigt. Für jedes Teilfeld wird anhand der CAD-Daten des herzustellenden Objekts bereits vor der Belichtung der Schicht ermittelt, in welchem Umfang innerhalb dieses Teilfelds eine Belichtung stattfinden wird, also z.B. welcher Anteil der Fläche eines Teilfelds belichtet werden wird. Anhand dieser Information kann eine Anpassung der innerhalb eines Teilfelds einzubringenden Wärmemenge pro Flächeneinheit stattfinden. In Teilfeldern, in denen in großem Umfang eine Belichtung stattfindet, kann also die einzubringende Wärmemenge pro Flächeneinheit reduziert werden und in Teilfeldern, in denen z.B. nur eine kleine Fläche belichtet wird, kann die einzubringende Wärmemenge pro Flächeneinheit erhöht werden.

Bezugnehmend auf Figur 6 wird also beispielsweise im Teilfeld 507 die einzubringende Wärmemenge pro Flächeneinheit reduziert und im Teilfeld 508 die einzubringende Wärmemenge pro Flächeneinheit erhöht. In den Teilfeldern 502, 506 und 512 werden entsprechend Werte für die einzubringende Wärmemenge pro Flächeneinheit gewählt. Diese Werte für die Teilfelder 502, 506 und 512 können beispielsweise durch Interpolation unter Berücksichtigung des Anteils der zu belichtenden Fläche innerhalb des jeweiligen Teilfelds ermittelt werden.

An den Grenzen zwischen Teilfeldern mit unterschiedlichem Wert für die einzubringende Wärmemenge pro Flächeneinheit kann durch Einfügen von Zwischenwerten in der Nähe der Grenze für einen allmählichen Übergang der einzubringenden Wärmemenge pro Flächeneinheit von einem Teilfeld zum anderen gesorgt werden. Die Zwischenwerte für die einzubringende Wärmemenge pro Flächeneinheit können ebenfalls durch Interpolation (z.B. lineare Interpolation oder Spline-Interpolation) bestimmt werden.

Bevorzugt wird zusätzlich zum oder statt des Anteils der zu belichtenden Fläche innerhalb eines Teilfelds in noch genauerer Weise die innerhalb eines Teilfelds eingebrachte Wärmemenge berücksichtigt. Dies kann in folgender Weise geschehen:

Wird beispielsweise die Wärmemenge zum Verfestigen des Aufbaumaterials dergestalt in das Material eingebracht, dass zu belichtende Schichtbereiche mit einem Laserstrahl überstrichen werden, dann werden die Belichtungsparameter (also z.B. Laserleistung, Strahlablenkgeschwindigkeit, Länge eines Bewegungsvektors oder der Belichtungstyp) vor Beginn der Belichtung der Schicht durch die Steuerung 10 festgelegt, bevorzugt unter Zugrundelegung der Gleichung (1), wie es oben beschrieben wurde.

Der Begriff Strahlablenkgeschwindigkeit soll hier die Geschwindigkeit bezeichnen, mit der der Auftreffpunkt des Laserstrahls auf die Schicht sich über diese bewegt infolge der Aktion der Ablenkvorrichtung 8.

Der Begriff Bewegungsvektor soll eine Strecke bezeichnen, entlang derer der Auftreffpunkt sich linear bewegt, bevor eine Richtungsänderung stattfindet.

Der Begriff Belichtungstyp soll ein bestimmtes Bewegungsmuster charakterisieren, mit dem der Auftreffpunkt über die Schicht bewegt wird. Zum Beispiel kann ein Objektquerschnitt dadurch verfestigt werden, dass er einfach mit nebeneinander liegenden parallelen Belichtungsvektoren überstrichen wird. Alternativ dazu kann man z.B. eine Streifenbelichtung wählen: Bei dieser wird der Objektquerschnitt in mehrere Streifen einer Breite b zerlegt und die Belichtung erfolgt dann Streifen für Streifen, z.B. indem die parallelen Belichtungsvektoren eine Länge b haben und sich in Richtung der Breite eines Streifens erstrecken. Daneben sind noch andere Belichtungstypen möglich.

Zur Ermittlung der innerhalb eines Teilfeldes eingetragenen Wärmeenergie muss über die Wärmeenergiebeträge summiert werden, die durch jeden Belichtungsvektor in diesem Teilfeld in die Schicht eingetragen werden. Für den resultierenden Teilfeld-Energieeintrag ergibt sich entsprechend:

$$\text{Teilfeld-Energieeintrag} = \sum \text{Laserleistung} / (\text{Strahlablenkgeschwindigkeit} * \text{Vektorlänge}) \quad (2).$$

Hierbei wird über die Anzahl der in dem Teilfeld liegenden Belichtungsvektoren summiert (falls ein Vektor über die Teilfeldgrenze hinausgeht, wird dies über die im Teilfeld liegende Vektorlänge berücksichtigt). Der so ermittelte Teilfeld-Energieeintrag kann nun durch Abändern der Laserleistung und/oder Strahlablenkgeschwindigkeit reduziert oder erhöht werden.

Weiter bevorzugt wird bei der Einstellung der in einem Teilfeld einzubringenden Wärmemenge pro Flächeneinheit auch der Belichtungstyp berücksichtigt: Erstrecken sich die Belichtungsvektoren z.B. über das gesamte Teilfeld, dann kann in der Pulverschicht ein Punkt nahe eines einzelnen Belichtungsvektors länger auskühlen als z.B. bei nebeneinander liegenden kurzen Belichtungsvektoren, wo ein Punkt in kurzen zeitlichen Abständen durch in seiner Nähe liegende Belichtungsvektoren aufgeheizt wird. Abhängig von der Belichtungsart und der Häufigkeit des Aufeinandertreffens von Belichtungsvektoren kann die einzubringende Wärmemenge pro Flächeneinheit reduziert oder erhöht werden.

In einer Abwandlung des soeben beschriebenen Vorgehens wird für die Korrektur der einzubringenden Wärmemenge pro Flächeneinheit nicht nur der zunächst ermittelte Teilfeld-Energieeintrag in der aktuell zu belichtenden Schicht berücksichtigt. Zusätzlich wird auch noch der Teilfeld-Energieeintrag in das gleiche Teilfeld in der darunterliegenden Schicht und/oder in der darüberliegenden Schicht berücksichtigt. In einer noch weitergehenden Abwandlung werden Teilfeld-Energieeinträge in das gleiche Teilfeld in mehreren unter der aktuellen Schicht liegenden Schichten und/oder mehreren über der aktuellen Schicht liegenden Schichten berücksichtigt.

Bei den beschriebenen Abwandlungen des Vorgehens berücksichtigt man, dass angesichts des Wärmetransports über die Schichtgrenzen hinweg eine Volumenbetrachtung, also eine Betrachtung, wieviel Wärmeenergie in ein Teilvolumen eingetragen wird, zu noch genaueren Ergebnissen führt. Letztendlich hat hierbei auch die Schichtdicke einen Einfluss:

Die obige Beziehung (2) kann (wenn ein Teilvolumen einer Schicht betrachtet wird) als

$$\text{Teilvolumen-Energieeintrag} = \sum \text{Laserleistung} / (\text{Strahlablenkgeschwindigkeit} * \text{Vektorlänge} * \text{Schichtdicke}) \quad (3)$$

formuliert werden. Bei Erstreckung eines Teilvolumens über eine Anzahl n von Schichten ist in Gleichung (3) die Schichtdicke noch mit der entsprechenden Anzahl n zu multiplizieren.

Allgemein sollte der Einfluss des Wärmetransports über die Schichtgrenzen hinweg umso größer sein, je geringer die Schichtdicke ist.

## Patentansprüche

1. Verfahren zum schichtweisen Aufbau mindestens eines dreidimensionalen Objektes (3) aus einem pulverförmigen Baumaterial mittels aufeinanderfolgenden Verfestigens von Schichten des pulverförmigen Baumaterials jeweils an jenen Stellen einer Schicht, die dem Querschnitt des mindestens einen Objekts entsprechen, wobei die Verfestigung durch Einbringen von Wärmeenergie bewerkstelligt wird und das Verfahren die folgenden Schritte aufweist:

einen ersten Pulverauftragsschritt des Bereitstellens einer Schicht eines pulverförmigen Baumaterials auf einer Bauunterlage (2) oder einer zuvor bereitgestellten Schicht des pulverförmigen Baumaterials,

einen ersten Vorerwärmungsschritt des Vorerwärmens des aufgetragenen Baumaterials auf eine Vorerwärmungstemperatur, unterhalb der Temperatur, bei der das Material verfestigt wird,

einen ersten Verfestigungsschritt des Verfestigens der aufgetragenen Schicht mittels elektromagnetischer Strahlung oder Teilchenstrahlung (7), bei dem die Strahlung auf alle zu verfestigenden Stellen der Schicht einwirkt, so dass das Pulver an diesen Stellen durch die durch die Strahlung eingebrachte Wärmeenergie verfestigt wird,

einen zweiten Pulverauftragsschritt des Bereitstellens einer Schicht eines pulverförmigen Baumaterials auf einer bereits zuvor an ausgewählten Stellen verfestigten Schicht,

einen zweiten Vorerwärmungsschritt des Vorerwärmens des aufgetragenen Baumaterials auf eine Vorerwärmungstemperatur, unterhalb der Temperatur, bei der das Material verfestigt wird,

einen zweiten Verfestigungsschritt des Verfestigens der aufgetragenen Schicht mittels elektromagnetischer Strahlung oder Teilchenstrahlung (7), bei dem die Strahlung auf alle zu verfestigenden Stellen der Schicht einwirkt, so dass das Pulver an diesen Stellen durch die durch die Strahlung eingebrachte Wärmeenergie verfestigt wird,

wobei der zweite Pulverauftragsschritt, der zweite Vorerwärmungsschritt und der zweite Verfestigungsschritt nacheinander so oft wiederholt werden, bis alle Querschnitte des mindestens einen herzustellenden dreidimensionalen Objekts verfestigt sind,

**dadurch gekennzeichnet, dass**

in mindestens einem zweiten Verfestigungsschritt die durch die elektromagnetische Strahlung oder Teilchenstrahlung (7) eingebrachte Wärmeenergiemenge pro Einheitsfläche in mindestens einem Teilbereich der Schicht in Abhängigkeit von der Zeitdauer des vorangegangenen Verfestigungsschritts für die vorhergehende Pulverschicht oder in Abhängigkeit von der im Vorhinein berechneten Zeitdauer des aktuellen zweiten Verfestigungsschritts eingestellt wird.

2. Verfahren nach Anspruch 1, bei dem der Teilbereich der Schicht so gewählt wird, dass der gesamte Teilbereich über einem im vorangegangenen Verfestigungsschritt in der vorhergehenden Pulverschicht verfestigten Bereich liegt.

3. Verfahren nach Anspruch 1 oder 2, wobei die in dem mindestens einen zweiten Verfestigungsschritt eingebrachte Wärmeenergiemenge pro Einheitsfläche in dem Teilbereich einen Faktor (K) enthält, der für alle zu verfestigenden Stellen der Schicht in dem Teilbereich gleich ist und von der Zeitdauer des zweiten Verfestigungsschritts für die vorhergehende Pulverschicht und/oder der im Vorhinein berechneten Zeitdauer des aktuellen zweiten Verfestigungsschritts abhängt.

4. Verfahren nach Anspruch 3, bei dem der Faktor K empirisch ermittelt wird, indem

• ein Testobjekt mit in Aufbaurichtung konstantem Querschnitt mehrmals hintereinander hergestellt wird, wobei sich die Herstellungsvorgänge dadurch voneinander unterscheiden, dass die Zeitdauer des Verfestigungsschritts für einen Testobjektquerschnitt unterschiedlich ist,
• eine Objekteigenschaft an jedem der Objekte ermittelt wird
• die erhaltene Abhängigkeit der Objekteigenschaft von der Zeitdauer des Verfestigungsschritts für einen Testobjektquerschnitt durch eine Funktion angenähert wird und
• der Faktor K auf der Basis dieser Funktion in Abhängigkeit von der Zeitdauer des vorangegangenen zweiten Verfestigungsschritts für die vorhergehende Pulverschicht und/oder in Abhängigkeit von der im Vorhinein berechneten Zeitdauer des aktuellen zweiten Verfestigungsschritts eingestellt wird.

5. Verfahren nach Anspruch 4, bei dem sich die Herstellungsvorgänge dadurch unterscheiden, dass der Verfestigungsschritt eine Wartezeit ohne Verfestigung aufweist, deren Länge von Herstellungsvorgang zu Herstellungsvorgang variiert.

6. Verfahren nach Anspruch 4 oder 5, bei dem die an den Testobjekten ermittelte Objekteigenschaft eine mechanische Eigenschaft, eine Abmessung oder ein Parameter zur Beschreibung der Oberflächenqualität ist.

7. Verfahren nach einem der Ansprüche 3 bis 6, bei dem der Faktor K in Abhängigkeit von der Zeitdauer des vorangegangenen zweiten Verfestigungsschritts für N vorhergehende Pulverschichten festgelegt wird, wobei N eine ganze Zahl ist, die minimal den Wert zwei hat und maximal der Anzahl der vorangegangenen Pulverschichten entspricht.

**8.** Verfahren nach einem der Ansprüche 1 bis 7, bei dem in dem mindestens einen zweiten Verfestigungsschritt im Randbereich des zu verfestigenden Bereichs einer Schicht der beam offset eingestellt wird in Abhängigkeit von der Zeitdauer des vorangegangenen zweiten Verfestigungsschritts für eine oder mehrere vorhergehende Pulverschichten und/oder in Abhängigkeit von der im Vorhinein berechneten Zeitdauer des aktuellen zweiten Verfestigungsschritts.

**9.** Vorrichtung zum schichtweisen Aufbau mindestens eines dreidimensionalen Objektes aus einem pulverförmigen Baumaterial mittels aufeinanderfolgenden Verfestigens von Schichten des pulverförmigen Baumaterials jeweils an jenen Stellen einer Schicht, die dem Querschnitt des mindestens einen Objekts entsprechen, wobei die Verfestigung durch Einbringen von Wärmeenergie bewerkstelligt wird und die Vorrichtung aufweist:

eine Bauunterlage (2) zum Tragen des zu bildenden Objektes (3) ;
eine Auftragsvorrichtung (11, 12) zum Aufbringen einer Schicht des pulverförmigen Baumaterials auf die Oberfläche der Bauunterlage oder eine bereits vorhandene Schicht,
eine Heizvorrichtung (9), welche Wärmeenergie zum Vorwärmen der pulverförmigen Baumaterialschicht liefern kann,
eine Bestrahlungsvorrichtung (6, 8), die elektromagnetische Strahlung oder Teilchenstrahlung (7) emittiert und in der Lage ist, alle in einer Schicht zu verfestigenden Stellen so zu bestrahlen, dass das Pulver an diesen Stellen durch die durch die Strahlung eingebrachte Wärmeenergie verfestigt wird, und **gekennzeichnet durch**
eine Steuereinrichtung (10), welche die Bestrahlungsvorrichtung so steuert, dass die durch die elektromagnetische Strahlung oder Teilchenstrahlung (7) eingebrachte Wärmeenergiemenge pro Einheitsfläche zumindest in einem Teilbereich der Pulverschicht von der Zeitdauer des Verfestigungsschritts für die vorhergehende Pulverschicht und/oder der im Vorhinein berechneten Zeitdauer des Verfestigungsschritts für die aktuell zu verfestigende Schicht abhängt.

**10.** Vorrichtung nach Anspruch 9, bei der die Steuervorrichtung den Teilbereich so wählt, dass der gesamte Teilbereich über einem im vorangegangenen Verfestigungsschritt in der vorhergehenden Pulverschicht verfestigten Bereich liegt.

**11.** Vorrichtung nach Anspruch 9 oder 10, bei der die Steuereinrichtung (10) die Bestrahlungsvorrichtung so steuert, dass in dem Teilbereich der Schicht die eingebrachte Wärmeenergiemenge pro Einheitsfläche einen Faktor (K) enthält, der für alle Stellen der Schicht in diesem Teilbereich gleich ist und von der Zeitdauer des Verfestigungsschritts für die vorhergehende Pulverschicht und/oder der im Vorhinein berechneten Zeitdauer des Verfestigungsschritts für die aktuell zu verfestigende Schicht abhängt.

**12.** Vorrichtung nach einem der Ansprüche 9 bis 11, bei der die Bestrahlungsvorrichtung elektromagnetische Strahlung flächig oder linienförmig emittiert.

**13.** Vorrichtung nach einem der Ansprüche 9 bis 12, bei der die Steuereinrichtung (10) zusätzlich den beam offset in Abhängigkeit von der Zeitdauer des Verfestigungsschritts für die vorhergehende Pulverschicht und/oder der im Vorhinein berechneten Zeitdauer des Verfestigungsschritts für die aktuell zu verfestigende Schicht einstellt.

**14.** Vorrichtung nach einem der Ansprüche 9 bis 13, bei der die Bestrahlungsvorrichtung ein Laser ist und die Steuereinrichtung (10) die Bestrahlungsvorrichtung so steuert, dass die eingebrachte Wärmeenergiemenge pro Einheitsfläche durch Variation der Laserlichtintensität, durch Variation der Ablenkgeschwindigkeit des Laserstrahls oder durch Variation des Abstands der Laserstrahlspuren auf der Pulverschicht eingestellt wird.

**15.** Vorrichtung nach einem der Ansprüche 9 bis 14, bei der die Steuereinrichtung (10) die Bestrahlungsvorrichtung so steuert, dass die durch die elektromagnetische Strahlung oder Teilchenstrahlung (7) eingebrachte Wärmeenergiemenge pro Einheitsfläche an allen zu verfestigenden Stellen der Pulverschicht von der Zeitdauer des Verfestigungsschritts für die vorhergehende Pulverschicht und/oder der im Vorhinein berechneten Zeitdauer des Verfestigungsschritts für die aktuell zu verfestigende Schicht abhängt.

**Claims**

**1.** A method for a layer-wise construction of at least one three-dimensional object (3) from a building material in powder form by means of a consecutive solidification of layers of the building material in powder form at those positions of each layer that correspond to the cross-section of the at least one object, wherein the solidification is effected by the input of heat energy and the method has the following steps:

a first powder application step of providing a layer of a building material in powder form on a building support (2) or a previously provided layer of the building material in powder form,

a first pre-heating step of pre-heating the applied building material to a tree-hating temperature below the temperature at which the material is solidified,

a first solidification step of solidifying the applied layer by means of electromagnetic radiation or particle radiation (7), wherein the radiation acts on all positions to be solidified of the layer so that the powder at these positions is solidified by the heat energy that is input by the radiation,

a second powder application step of providing a layer of a building material in powder form on a layer that has been previously solidified at selected positions,

a second pre-heating step of pre-heating the applied building material to a pre-heating temperature below the temperature at which the material is solidified,

a second solidification step of solidifying the applied layer by means of electromagnetic radiation or particle radiation (7), wherein the radiation acts on all positions to be solidified of the layer so that the powder at these positions is solidified by the heat energy input by the radiation,

wherein the second powder application step, the second pre-heating step and the second solidification step are subsequently repeated until all cross-sections of the at least one three-dimensional object are solidified,

**characterised in that**

in at least one second solidification step the amount of heat energy input per unit area by the electromagnetic radiation or particle radiation (7) into at least one partial region of the layer is adjusted in dependence the duration of the preceding solidification step for the preceding powder layer or in dependence of the duration calculated in advance of the current second solidification step.

2. The method of claim 1, wherein the partial region of the layer is selected such that the whole partial region is located above a region that was solidified in the preceding powder layer in the preceding solidification step.

3. The method of claim 1 or 2, wherein the amount of heat energy input per unit area into the partial region in the at least one second solidification step incorporates a factor (K) that is the same for all positions to be solidified in the layer in said partial region and depends on the duration of the second solidification step for the preceding powder layer and/or the duration calculated in advance of the current second solidification step.

4. The method of claim 3, wherein the factor K is determined empirically in that

• a test object having a constant cross-section in the build direction is manufactured several times in succession, wherein the manufacturing processes differ from one another in that the duration of the solidification step for a test object cross-section is different,
• at each of the objects an object property is determined
• the obtained dependence of the object property on the duration of the solidification step for a test object cross-section is approximated by a function and
• the factor K is adjusted based on this function in dependence of the duration of a prior second solidification step for the preceding powder layer and/or in dependence of the duration calculated in advance of the current second solidification step.

5. The method of claim 4, wherein the solidification processes are different from one another in that the solidification step comprises a waiting time without solidification the length of which varies from manufacturing process to manufacturing process.

6. The method of claim 4 or 5, wherein the object property determined at the test objects is a mechanical property, a dimension or a parameter for characterising the surface quality.

7. The method of one of claims 3 to 6, wherein the factor K is set in dependence of the duration of the prior second solidification step for N preceding powder layers, wherein N is an integer having a minimum value of two and a maximum value corresponding to the number of preceding powder layers.

8. The method of one of claims 1 to 7, wherein in said at least one second solidification step, in the peripheral area of the region to be solidified of a layer the beam offset is adjusted in dependence of the duration of the preceding second solidification step four one or more preceding powder layers and/or in dependence of the duration calculated in advance of the current second solidification step.

9. A device for a layer -wise construction of at least one three-dimensional object from a building material in powder form by means of a consecutive solidification of layers of the building material in powder form at those positions of each layer that correspond to the cross-section of the at least one object, wherein the solidification is effected by the input of heat energy and the device comprises:

a construction support (2) for supporting the object (3) to be formed;
an application device (11, 12) for applying a layer of the building material in powder form onto the surface of the construction support or an already existing layer,
a heating device (9) that is able to supply heat energy for pre-heating the building material layer in powder form,
an irradiation device (6, 8) emitting electromagnetic radiation or particle radiation (7) and being able to irradiate all positions to be solidified in a layer such that the powder at these positions is solidified by the heat energy input by the radiation and is **characterised by**
a control device (10) controlling the irradiation device such that the heat energy amount input per unit area by the electromagnetic radiation or particle radiation (7) in at least a partial region of the powder layer depends on the duration of the solidification step for the preceding powder layer and/or the duration calculated in advance of the solidification step for the current layer to be solidified.

10. The device according to claim 9, in which the control device selects the partial region such that the whole partial region is located above a region that was solidified in the preceding powder layer in the preceding solidification step.

11. The device according to claim 9 or 10, in which the control device (10) controls the irradiation device such that the amount of heat energy input per unit area into the partial region of the layer incorporates a factor (K), which is the same for all positions of the layer in said partial region and which depends on the duration of the solidification step for the preceding powder layer and/or the duration of the solidification step calculated in advance for the current layer to be solidified.

12. The device according to one of claims 9 to 11, in which the irradiation device emits electromagnetic radiation areally or linearly.

13. The device according to one of claims 9 to 12, in which the control device (10) additionally adjusts the beam offset depending on the duration of the solidification step for the preceding powder layer and/or the duration of the solidification step calculated in advance for the current layer to be solidified.

14. The device according to one of claims 9 to 13, in which the irradiation device is a laser and the control device (10) controls the irradiation device such that the amount of heat energy input per unit area is adjusted by variation of the laser light intensity, by variation of the deflection velocity of the laser beam or by variation of the distance between laser beam paths on the powder layer.

15. The device according to one of claims 9 to 14, in which the control device (10) controls the irradiation device such that the amount of heat energy input per unit area by the electromagnetic radiation or particle radiation (7) at all positions to be solidified of the powder layer depends on the duration of the solidification step for the preceding powder layer and/or the duration calculated in advance of the solidification step for the current layer to be solidified.

**Revendications**

1. Procédé de construction couche par couche d'au moins un objet (3) tridimensionnel dans un matériau de construction pulvérulent au moyen d'une consolidation successive de couches du matériau de construction pulvérulent respectivement en ces endroits d'une couche qui correspondent à la coupe transversale du au moins un objet, dans lequel la consolidation est réalisée par l'apport d'une énergie thermique et le procédé présente les étapes suivantes :

une première étape d'application de poudre destinée à mettre en place une couche d'un matériau de construction pulvérulent sur un support de construction (2) ou une couche précédemment mise en place du matériau de construction pulvérulent,
une première étape de préchauffage destinée à préchauffer le matériau de construction appliqué à une température de préchauffage, en-dessous de la température à laquelle le matériau se solidifie,

une première étape de solidification destinée à solidifier la couche appliquée au moyen d'un rayonnement électromagnétique ou d'un rayonnement particulaire (7) par lequel le rayonnement agit sur tous les endroits à solidifier de la couche, de sorte que la poudre en ces endroits soit solidifiée par l'énergie thermique apportée par le rayonnement,

une deuxième étape d'application de poudre destinée à mettre en place une couche d'un matériau de construction pulvérulent sur une couche solidifiée déjà auparavant en des endroits sélectionnés,

une deuxième étape de préchauffage destinée à préchauffer le matériau de construction appliqué à une température de préchauffage, en-dessous de la température à laquelle le matériau se solidifie,

une deuxième étape de solidification destinée à solidifier la couche appliquée au moyen d'un rayonnement électromagnétique ou d'un rayonnement particulaire (7) par lequel le rayonnement agit sur tous les endroits à solidifier de la couche, de sorte que la poudre en ces endroits soit solidifiée par l'énergie thermique apportée par le rayonnement,

dans lequel la deuxième étape d'application de poudre, la deuxième étape de préchauffage et la deuxième étape de solidification sont répétées les unes après les autres jusqu'à ce que toutes les coupes transversales du au moins un objet tridimensionnel à fabriquer soient solidifiées,

**caractérisé en ce que**

dans au moins une deuxième étape de solidification la quantité d'énergie thermique par surface unitaire apportée par le rayonnement électromagnétique ou le rayonnement particulaire (7) est ajustée dans au moins une sous-région de la couche en fonction de la durée de l'étape de solidification précédente pour la couche de poudre précédente ou en fonction de la durée calculée au préalable de la deuxième étape de solidification en cours.

2. Procédé selon la revendication 1, dans lequel la sous-région de la couche est sélectionnée de telle sorte que la totalité de la sous-région se situe par-dessus une région solidifiée dans la couche de poudre précédente dans l'étape de solidification précédente.

3. Procédé selon la revendication 1 ou 2, dans lequel la quantité d'énergie thermique par surface unitaire apportée dans la au moins une deuxième étape de solidification contient dans la sous-région un facteur (K) qui est le même dans la sous-région pour tous les endroits à solidifier de la couche et dépend de la durée de la deuxième étape de solidification pour la couche de poudre précédente et/ou de la durée calculée au préalable de la deuxième étape de solidification en cours.

4. Procédé selon la revendication 3, dans lequel le facteur K est déterminé empiriquement en ce que

- un objet à tester est fabriqué plusieurs fois à la suite avec une coupe transversale constante dans la direction de construction, dans lequel les opérations de fabrication se différencient les unes des autres en ce que la durée de l'étape de solidification pour une coupe transversale d'un objet à tester est différente,
- une propriété d'objet est déterminée sur chacun des objets,
- la dépendance obtenue de la propriété d'objet par rapport à la durée de l'étape de solidification pour une coupe transversale d'un objet à tester est approchée par une fonction et
- le facteur K est, sur la base de cette fonction, ajusté en fonction de la durée de la deuxième étape de solidification précédente pour la couche de poudre précédente et/ou en fonction de la durée calculée au préalable de la deuxième étape de solidification en cours.

5. Procédé selon la revendication 4, dans lequel les opérations de fabrication se différencient en ce que l'étape de solidification présente un temps d'attente sans solidification dont le délai varie d'une opération de fabrication à une autre.

6. Procédé selon la revendication 4 ou 5, dans lequel la propriété d'objet déterminée sur les objets à tester est une propriété mécanique, une dimension ou un paramètre pour décrire la qualité de surface.

7. Procédé selon l'une des revendications 3 à 6, dans lequel le facteur K est établi en fonction de la durée de la deuxième étape de solidification précédente pour N couches de poudre précédentes, dans lequel N est un nombre entier qui présente au minimum la valeur deux et correspond au maximum au nombre des couches de poudre précédentes.

8. Procédé selon l'une des revendications 1 à 7, dans lequel, dans la au moins une deuxième étape de solidification, le décalage de faisceau est ajusté dans la région périphérique de la région à solidifier d'une couche, en fonction de la durée de la deuxième étape de solidification précédente pour une ou plusieurs couches de poudre précédentes et/ou en fonction de la durée calculée au préalable de la deuxième étape de solidification en cours.

9. Dispositif de construction couche par couche d'au moins un objet tridimensionnel dans un matériau de construction pulvérulent au moyen d'une consolidation successive de couches du matériau de construction pulvérulent respectivement en ces endroits d'une couche qui correspondent à la coupe transversale du au moins un objet, dans lequel la consolidation est réalisée par l'apport d'une énergie thermique et le dispositif présente :

un support de construction (2) pour porter l'objet (3) à former ;
un dispositif d'application (11, 12) pour déposer une couche du matériau de construction pulvérulent sur la surface du support de construction ou une couche déjà présente,
un dispositif de chauffage (9) qui est à même de fournir une énergie thermique pour préchauffer la couche de matériau de construction pulvérulent,
un dispositif de rayonnement (6, 8) qui émet un rayonnement électromagnétique ou un rayonnement particulaire (7) et est en mesure d'irradier tous les endroits à solidifier d'une couche de sorte que la poudre en ces endroits soit solidifiée par l'énergie thermique apportée par le rayonnement, et
**caractérisé par**
un équipement de commande (10) qui commande le dispositif de rayonnement de sorte que la quantité d'énergie thermique par surface unitaire apportée par le rayonnement électromagnétique ou le rayonnement particulaire (7) dépende, au moins dans une sous-région de la couche de poudre, de la durée de l'étape de solidification pour la couche de poudre précédente et/ou de la durée calculée au préalable de l'étape de solidification pour la couche à solidifier en cours.

10. Dispositif selon la revendication 9, dans lequel le dispositif de commande sélectionne la sous-région de telle sorte que la totalité de la sous-région se situe par-dessus une région solidifiée dans la couche de poudre précédente dans l'étape de solidification précédente.

11. Dispositif selon la revendication 9 ou 10, dans lequel l'équipement de commande (10) commande le dispositif de rayonnement de telle sorte que, dans la sous-région de la couche, la quantité d'énergie thermique par surface unitaire apportée contienne un facteur (K) qui est le même dans cette sous-région pour tous les endroits de la couche et dépend de la durée de l'étape de solidification pour la couche de poudre précédente et/ou de la durée calculée au préalable de l'étape de solidification pour la couche à solidifier en cours.

12. Dispositif selon l'une des revendications 9 à 11, dans lequel le dispositif de rayonnement émet un rayonnement électromagnétique de façon plane ou linéaire.

13. Dispositif selon l'une des revendications 9 à 12, dans lequel l'équipement de commande (10) ajuste en outre le décalage de faisceau en fonction de la durée de l'étape de solidification pour la couche de poudre précédente et/ou en fonction de la durée calculée au préalable de l'étape de solidification pour la couche à solidifier en cours.

14. Dispositif selon l'une des revendications 9 à 13, dans lequel le dispositif de rayonnement est un laser et l'équipement de commande (10) commande le dispositif de rayonnement de telle sorte que la quantité d'énergie thermique par surface unitaire apportée soit ajustée par variation de l'intensité de lumière laser, par variation de la vitesse de balayage du rayonnement laser ou par variation de la distance des traces de faisceau laser sur la couche de poudre.

15. Dispositif selon l'une des revendications 9 à 14, dans lequel l'équipement de commande (10) commande le dispositif de rayonnement de telle sorte que la quantité d'énergie thermique par surface unitaire apportée par le rayonnement électromagnétique ou le rayonnement particulaire (7) dépende, en tous les endroits à solidifier de la couche de poudre, de la durée de l'étape de solidification pour la couche de poudre précédente et/ou de la durée calculée au préalable de l'étape de solidification pour la couche à solidifier en cours.

FIG.1

FIG. 2

**Maße Testbauteile ohne erfindungsgemäße Anpassung**

FIG. 3

EP 3 099 469 B1

FIG. 4

# Maße Testbauteile mit erfindungsgemäßer Anpassung

FIG. 5

**FIG. 6**

**EP 3 099 469 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1568472 A1
- WO 2013127655 A1
- WO 9511100 A1
- WO 2013079581 A1